# EUROPEAN PATENT APPLICATION

(11) **EP 4 236 059 A2**
(43) Date of publication of application: **30.08.2023**
(21) Application number: 23181905.3
(22) Date of filing: 22.07.2019
(51) Int. Cl.: H02N 2/18

(54) **A PUMP ACTUATING CAP FOR PUMP DISPENSERS, SYSTEM AND METHOD FOR REMOTE MONITORING OF PRODUCT CONSUMPTION FROM SAID PUMP ACTUATING CAP**

(62) Divisional of application: 19382620.3
(71) Applicant: Openinnovation2go, S.L., 28223 Madrid (ES)
(72) Inventor: LONGARTE CIFRIÁN, Ignacio, 28223 Madrid (ES); DE PABLOS, David, 28223 Madrid (ES); ABAD DE ARANZÁBAL, Guillermo, 28223 Madrid (ES); BATURONE MORENO DE CARLOS, Pablo, 28223 Madrid (ES); GOMEZ FUENTE, Oscar, 28223 Madrid (ES); ALCALÁ GALÁN, Francisco, 28223 Madrid (ES); CAMPOS DE PADUA, Alfonso, 28223 Madrid (ES)
(74) Representative: Hoffmann Eitle

(57) **Abstract**

The invention refers to a pump actuating cap for a pump dispenser, the cap comprising a housing configured to be coupled with a pump to operate the pump. The cap further comprising: an electronic circuit, a power source to feed the electronic circuit, at least one antenna connected with the electronic circuit, and at least one pulse generator to activate the electronic circuit, and wherein the circuit, the power source, the antenna and the pulse generator are enclosed inside the housing. The pulse generator is arranged to be actuated by contacting with a pump, when the housing is operatively coupled with a pump. The electronic circuit has stored an unique identification code usable to identify the pump actuating cap, and wherein the electronic circuit is adapted such as when it is activated by the pulse generator, a signal containing the dispenser unique identification code, is transmitted by the antenna.

## Description

### Field and object of the invention

The invention refers in general to pump dispensers and components threreof, to discharge a metered dose of product like: perfume, cosmetic, cleaning or medical products.

More specifically, the invention refers to connected or smart pump dispensers that allow remote monitoring of product consumption. The invention can also be categorized within the technical field of Internet of Things.

An object of the invention is to provide a pump actuating cap (or head) for a pump dispenser that provides high-accurate determination of product level or quantity inside the dispenser, and that it is energy efficient since it requires very low power to operate.

Additionally, the pump actuating cap object of the invention can be manufactured with a reduced number of components, and it can be easily integrated in conventional pump dispensers avoiding redesigning or adapting existing dispensers.

The invention also refers to a pump dispenser incorporating the above-mentioned pump actuating cap, and to a system and a method for remote monitoring of product consumption in pump dispensers.

### Background of the invention

There are a number of consumer products that are dispensed in metered doses by means of pump dispensers, especially for dispensing fragrances, cosmetics, cleaning liquids, or medicines. The European patent application EP-0544549 A1 describes a conventional pump dispenser, that typically comprises a compression pump in the form of a cylinder that it is attached to a cap to be mounted on a container containing the product to be dispensed. A pump actuator pushes a piston inside the pump against the elastic action of a spring, in order to dispense the product through a nozzle formed internally in the pump actuator.

In a particular type of pump dispensers, the pump actuator as the form of a cap or head to operate the pump of the dispenser. For example, the US patent publication US 2007/0221686 A1 describes a dispenser of that type, wherein the cap has internally an sleeve tube that it is attachable to the output tube of a compression pump, such as by pressing down the cap the pump is compressed and a dose of product from the pump is dispensed through a nozzle of the cap.

The diameter of the output tube of the compression pump is standard, so the caps are generally designed to match that diameter and to be used with a large variety of pump dispensers.

In recent years, some consumer containers like water bottles have been introduced in the market, incorporating electronics to automatically monitor consumption of liquid stored in the container. These containers, generally referred as smart or connected containers, rely on sensors to measure liquid level inside the container to determine the remaining quantity of liquid.

Conventional sensors like: ultrasound, optic, pressure, or capacitive sensors, are normally used to measure liquid level inside this type of containers. Whereas conventional sensors are generally reliable for measuring large amount of liquid level in relatively large containers, they are not accurate enough for measuring small amounts of liquids (in the order of microliters), for example in the case of perfume containers.

In addition to the inaccuracy of conventional sensors for measuring small amounts of liquids, another drawbacks of known techniques for monitoring liquid consumption in portable containers, is the excessive consumption of battery power, considering that the sensors have to be energized for their operation, rendering these containers inconvenient for users because they need to recharge batteries very often.

Therefore, improving measuring accuracy and energy efficiency is critical in the field of connected containers or dispensers.

Another challenge in the development of these connected products due to the space and shape limitations and restrictions, is the integration of the necessary electronic components like sensors, communication modules and batteries, normally mounted on a Printed Circuit Board, inside the dispenser, and without interfering with the daily use of the dispenser and without affecting its exterior design and appearance.

In particular, the integration of radio frequency communication devices in the confined space of a dispenser is also a challenge, because communication electronic components have to be separated a minimum distance to avoid electromagnetic interference and noise in the signal transmission.

Furthermore, the consumer products industry is nowadays focused on producing sustainable or green products, thus, for any consumer or disposable product that contains a battery, it is desirable that the battery be as small as possible or that there is no battery at all.

With respect to the communications protocols used by these connected devices, due to the space restrictions identified, the current limited solutions in these types of containers are normally based on short range radio communications protocols (NFC, Bluetooth, ZigBee, or RFID), that require smaller and less powerful antennas and less energy power transmitting signals.

The Bluetooth option is the most widely used, but it complicates usability for the consumer, being a hassle for the following reasons:
- Bluetooth requires a smart phone close to the product or in the range of the product with a relative frequency, if the measure/sensor information must be known on a continued and reliable basis. Short range wireless technologies require the device to be in range of a particular location or other device/local station; NFC requires a particularly close range.
- Bluetooth is not as versatile as cellular technology because it requires a data hub, (and so works always with a companion device such as a smartphone), that has to be enabled with the correct / updated Bluetooth version.
- experience indicate that when there are many low-range type electronic devices in a household/home, the connectivity tend to experiment regular problems of identification, pairing, and being on-off and need to reset.
- some mobile phones (i.e. Android models), automatically disconnect the Bluetooth communication when the battery is under a given level, to save energy. Every time Bluetooth is turn-on again, the pairings need to set and in most cases this is not automatic.

That is why this short-range devices need also a pairing button required to synchronize again and again with the companion / local station.

Despite the above-mentioned drawbacks of known techniques for monitoring liquid or product consumption in dispensers, still there is an increasing trend in the consumer products industry, to further develop connected devices, that will make available for the consumers new services and consumption habits, some of them related to empowering and tracking the circular economy and a more sustainable re-use of containers.

### Summary of the invention

The invention is defined in the attached independent claims, and satisfactorily solves the drawbacks of the prior art by providing a pump actuating cap capable of determining accurate product level without relying on conventional sensors.

An aspect of the invention refers to a pump actuating cap for a pump dispenser, wherein the cap comprises a housing having a top base, a lateral wall, an open bottom base, and a nozzle for the output of a product to be dispensed. The housing is configured to be operatively coupled with a pump, namely a conventional compression pump, through the open bottom base to operate the pump, such as by pressing down the cap the pump is compressed and a dose of product is dispensed through the nozzle. The dose of product is known and it is related to the volume of the pump internal chamber.

When the pump actuating cap is released from the pressed-down position, the pump actuator returns to its resting position.

Conventionally, the compression pump is a cylinder that houses a piston or plunger, a spring and a valve, so when the piston is pressed by the pump actuator against the action of the spring, a product inside the pump, is expelled through the nozzle while the valve is closed. When the pressure of the pump actuator is released, the piston returns to its initial position due to the elastic action of the spring, suctioning at the same time a new dose of product from a container into the pump.

The housing of the cap has a tubular sleeve having an axis (X) fluidly communicated with the nozzle, and the pump has an output tube that it is coupled and fitted inside the tubular sleeve of the housing such as the two components, housing and pump are coupled.

The cap further comprising: an electronic circuit, optionally a power source to feed the electronic circuit, at least one antenna connected with the electronic circuit, and at least one electric pulse generator that can be embodied for example as a: any type of push-bottom switch, a piezo-electric member, or an energy harvest device.

The electronic circuit, the power source, the antenna and the switch device are enclosed inside the housing. The processor, the communication module and the memory can be implemented as individual circuits, but preferably they are all implemented as one integrated circuit mounted and connected to a Printed Circuit Board (PCB). The electronic circuit has two status modes, a sleep operation mode in which it is inoperative and there is no power consumption or an ultra-minimum power consumption, and a run operation mode in which the circuit is powered by the power source, and the circuit runs a program stored in the memory to transmit the code or other functions of the circuit. When the electric pulse generator is activated by the pump actuator, the circuit turns from the sleep mode to the run mode and transmit a signal, after which the circuit returns to the sleep mode.

The terminals of the electric pulse generator are connected with inputs of the processor, and the processor is programmed, such as when an electric pulse is received the run mode is triggered. This operation of the processor is conventional, and since a skilled person in the art is familiar with this type of circuits, it is not necessary to describe its operation with more detail.

When the housing is operatively coupled with a pump, the electric pulse generator is arranged to be actuated, through the open bottom base of the housing, by contacting with a pump when the cap reaches its pressed-down position.

The electronic circuit has stored a unique identification code usable to identify the pump actuating cap, and wherein the electronic circuit is adapted for counting the number of activations by the electric pulse generator within a predefined time lapse (a session), after which, a signal containing the dispenser unique identification code and preferably an activation session code, is transmitted by the antenna, for its processing at a central monitoring platform. The activation code include information related to the counted pulses, that is, the number of pump actuations, and preferably also information about the date and hour of each activation, battery status etc.

Since several full pump activations are grouped as a session, and the session information is transmitted in a single signal instead of a signal transmission for each activation (full or intermediate), a significant power saving is achieved.

The pump actuating cap can be used with a great variety of existing pump dispensers without requiring any significant modification in the pump nor in the dispenser.

In a preferred embodiment, the electric pulse generator is a push-button switch having an actuating pin that actuates a switch mechanism, such as the switch is closed by pressing down the switch actuator, and when pressure is released from the pin, the switch actuator returns to its initial open position due to the action of a spring, so the switch is only closed while the actuating pin is pressed.

The housing a has a tubular sleeve having an axis (X) which is fluidly communicated with the nozzle and adapted to be coupled with an output tube of a pump. Preferably, the switch device is arranged in such a way that the actuating pin of the switch is displaceable in a direction parallel to axis (X) of the sleeve.

The cap additionally comprises a bottom cover placed inside the housing, preferably parallel to the top cover considering that the top cover is generally a flat part. The bottom cover is fixed to the housing so that a chamber is formed internally in the housing between the top base, the lateral wall and the bottom cover. The power source includes at least one battery, and wherein the electronic circuit and the battery are enclosed inside the chamber, in order to be isolated from the housing exterior.

The bottom cover has an opening and the switch device is arranged in such a way that the actuating pin extends outside the chamber through the opening. Alternatively, the actuating pin is displaceable inside the chamber and it is arranged to be accessible through the opening for its activation.

In an alternative embodiment, the bottom cover is displaceable and forms part of the electric pulse generator. The displaceable bottom cover is mounted inside the housing, such it is displaceable relative to the housing, and the electric pulse generator further comprises a piezo-electric member arranged such as the displacement of the bottom cover actuates, that is, push on the piezo-electric member to generate an electric pulse caused by flexing or deforming and due to the piezo-electric property of the material. The piezo-electric member is connected with the electronic circuit to act as the power source to activate the electronic circuit when an electric pulse is generated. An energy management module rectifies the alternating pulses generated by the energy harvest devices, and stores the rectified energy in a super-capacitor to be used as a power source for the electronic circuit.

Therefore, the cooperating displaceable bottom cover and the piezo-electric member, configure an electric pulse generator or energy harvest device for the electronic circuit, that uses the energy generated by the user while pushing down the cap.

Due to the integration of electric pulse generator with the dispenser, the very kinetic energy of the human push, is enough to activate the circuit and to trigger the generation and transmission of a signal for every pump activation.

Preferably, the piezo-electric member comprises at least one flexible tab arranged with respect to the displaceable bottom cover, in such a way that the piezo-electric flexible tab is flexed by the displacement of the bottom cover when it moves towards the top base, and the bottom cover moves back to its initial position by the flex force of the tab. That is, the displaceable bottom cover is biased by the piezo-electric tab away from the top base of the housing.

In another preferred embodiment, the electric pulse generator comprises a displaceable bottom cover mounted inside the housing in a displaceable manner such as the bottom cover is displaceable relative to the housing, and an energy harvest device capable of transforming mechanical energy into an electric pulse. Energy harvest devices and the process of converting mechanical energy into an electric pulse are known for a skilled person in the art. The energy harvest device is arranged such as the displacement of the bottom cover activates the energy harvest device to generate an electric pulse. The energy harvest device is connected with the electronic circuit to generate voltages pulses that are counted by the electronic circuit. An energy management module rectifies the alternating pulses generated by the energy harvest devices, and stores the rectified energy in a super-capacitor to be used as a power source for the electronic circuit.

Any efficient human motion energy harvesting in this use cases requires an integrated design of the mechanical hardware parts, in conjunction with the dynamic energy generation management done electronically.

In this embodiment, a chamber is also defined internally in the housing between the top base, the lateral wall and the displaceable bottom cover, and wherein the electronic circuit and the energy harvest device are enclosed inside the chamber. The energy harvest device has a flexible member arranged to press the displaceable bottom cover away from the top cover.

The cap includes guiding means to guide the displacement of the bottom cover. Preferably, the bottom cover is guided by a tubular sleeve of the housing and an internal surface of the lateral wall of the housing.

The electronic circuit comprises operatively intercommunicated: a processor, a communication module, and a memory storing the unique identification code, and wherein the electronic circuit is adapted for counting the number of pulses generated by the electric pulse generator within a predetermined time lapse, and to transmit an electric signal containing the dispenser unique identification code and a pump session activation code containing information relative to the number of received pulses, and the pump activation session code preferably also includes a unique digital counter number, the date and time of creation of the session code, and battery charge level information.

Preferably, the communication module and the antenna are configured to communicate with a cellular communication network, or configured to communicate via a short-range communication protocol. Preferably, the antenna is a chip antenna mounted on the circuit printed board, and electrically connected with the communication module of the circuit, for example by means of a frequency adaptation filter.

Another aspect of the invention refers to a pump dispenser comprising the above pump actuating cap including all the alternatives described above, wherein the dispenser and the cap housing are operatively coupled, so the housing is displaceable between two end positions, a resting position and a pressed-down position, such as when the cap reaches the pressed-down position, a metered dose of product has been dispensed through the nozzle.

The electric pulse generator is arranged in such a way that when the pump actuating cap reaches its pressed-down position, the electric pulse generator is activated, by contacting with a part of the pump body, and when the cap is in its resting position, the electric pulse generator is des-activated. Therefore, the actuating pin in case of a push-button switch, the displaceable bottom cover in case of a piezo-electric switch, or the energy harvest device, are adapted and arranged to be contacted by the pump body when the pump actuating cap reaches its pressed-down position.

The dispenser of the invention might be regarded as a synthetic sensor since it does not rely on conventional sensors of any type, thereby saving energy required to power a sensor, and allowing a straightforward determination of product level and accurate monitoring of product quantity, simply by counting the number of pump activations.

The invention is uses existing parts of the pump dispenser, to reduce the number of electronic components, and allowing user hassle free wide range radio transmission, remote calibration and predictive maintenance.

In practical realization, the pump dispenser includes a container containing a product to be dispensed, which might in the form of: a liquid, foam, cream or gel, including a perfume and/or a cosmetic or pharmacologic composition.

Still another aspect of the invention refers to a system for remote monitoring of product consumption, comprising at least one pump dispenser as the one defined above and a remote central monitoring platform communicated through a communication network with the at least one pump dispenser. The central monitoring platform is adapted to receive and process signals containing the dispenser unique identification code and a pump activation session code, transmitted by the pump dispenser.

Since the dose dispensed by each type of dispensed product is metered, that is, it is known before hand, by counting the number of full pump activations (electric pulses), the quantity of dispensed product and the quantity of product remaining inside the container, can be directly and precisely determined. The counting of activations of the pump, can be carried out in the pump activation cap itself, or in a remote monitoring platform, such as product consumption is calculated by counting the number of full activations contained in an actuation session of the compression pump.

The invention allow that, perfume actuation sessions, hair care actuation sessions, skin care actuation sessions etc., are managed in the platform which a valuable information for a product distributor, but also enabling energy savings at the level of the cap itself.

Since the pump dispensers ensure stable, precise and regular dispensed amount of product every time it is actuated, an accurate determination of product level is determined without relying in any sensor and using a minimum amount of power.

The central monitoring platform is additionally adapted to perform: a predictive operation process, and a calibration and self-correction process.

### Brief description of the drawings

Preferred embodiments of the invention, are henceforth described with reference to the accompanying drawings, wherein:
Figure 1.- shows a perspective view of a pump dispenser incorporating the electronic pump actuating cap of the invention.
Figure 2.-shows in Figure A a perspective view of pump actuating cap of the invention incorporating a push-button switch, wherein the housing is represented as a transparent body to show the internal components. Figures B,C and D shows a sequence of movements of the cap in side elevational views of the same embodiment than Figure A, wherein Figure B shows the cap in a resting position; Figure C shows the cap in an intermediate position when the switch just contact the pump body; and Figure D shows the cap in a fully press-down position.
Figure 3.-shows similar representations than Figures 2 A, B, C and D, but with an alternative switch configuration.
Figure 4.- shows in Figure A a cross-sectional elevation view of a preferred embodiment of the cap incorporating a piezo electric member as a power source and an electric pulses generator; wherein Figure B is a top plan view taken from plane A-A in Figure A; and wherein Figure C is a bottom plan view taken from plane B-B in Figure A.
Figure 5.- shows in Figure A a partial perspective view of the same embodiment than Figure 4; and Figures B, C and D shows a sequence of movements of the cap in side elevational views, wherein Figure B shows the cap in a resting position; Figure C shows the cap in an intermediate position when the switch just contact the pump body; and Figure D shows the cap in a fully press-down position. Figure E is a front elevational view of an alternative embodiment in which the piezo-electric member is mounted with the displaceable bottom cover.
Figure 6.- shows in Figures A & B perspective views of the housing with an enlarged detail in Figure A of the guiding means.
Figure 7.- shows in Figure A a perspective view of an alternative embodiment with an inductive generator energy harvest device; and Figures B, C and D shows a sequence of movements of the cap in side elevational views, wherein Figure B shows the cap in a resting position; Figure C shows the cap in an intermediate position when the switch just contact the pump body; and Figure D shows the cap in a fully press-down position.
Figure 8.- shows an electric diagram of the electronic circuit integrated with the dispenser, and the system of the invention.
Figure 9.- shows a general flow diagram of the method according to the invention for obtaining accurate product level readings and monitoring.
Figure 10.- shows a flow diagram of the dispenser actuation session carried out inside the dispenser, to process level zero data inside the dispenser (firmware).
Figure 11.- shows a flow diagram of the remote determination of product level.
Figure 12.- shows several flow charts corresponding to several processes implemented in the CMP; wherein Figure A is the signal model training process; Figure B is the lost model process; Figure C is the ML pipeline operation; Figure D is the imputation model training; Figure E is another ML pipeline operation; and Figure F is the calibration process.

### Preferred embodiments of the invention

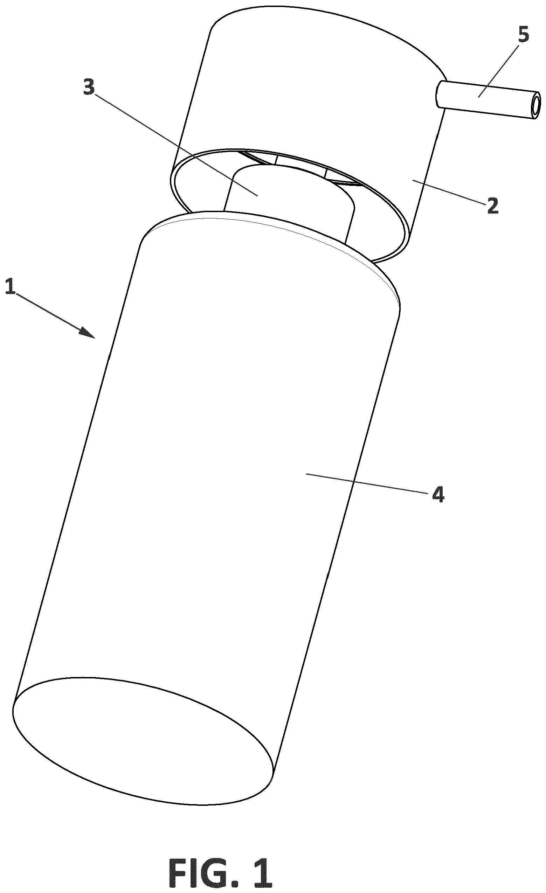

Figure 1 shows a pump dispenser (1) according to the invention, comprising a pump actuating cap (2) operatively coupled with a pump dispenser (3) in turn coupled with a container (4) containing a product to be dispensed.

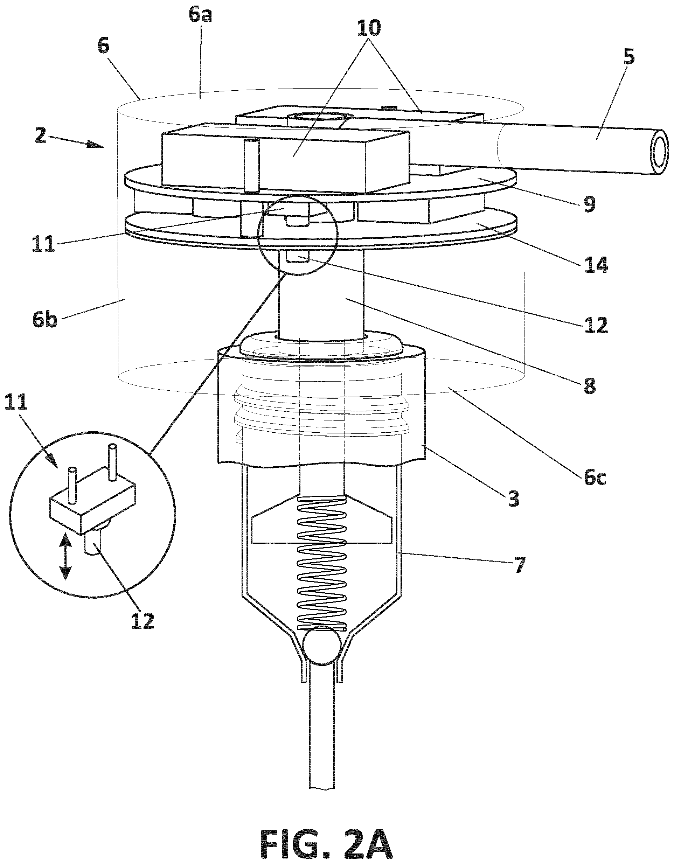

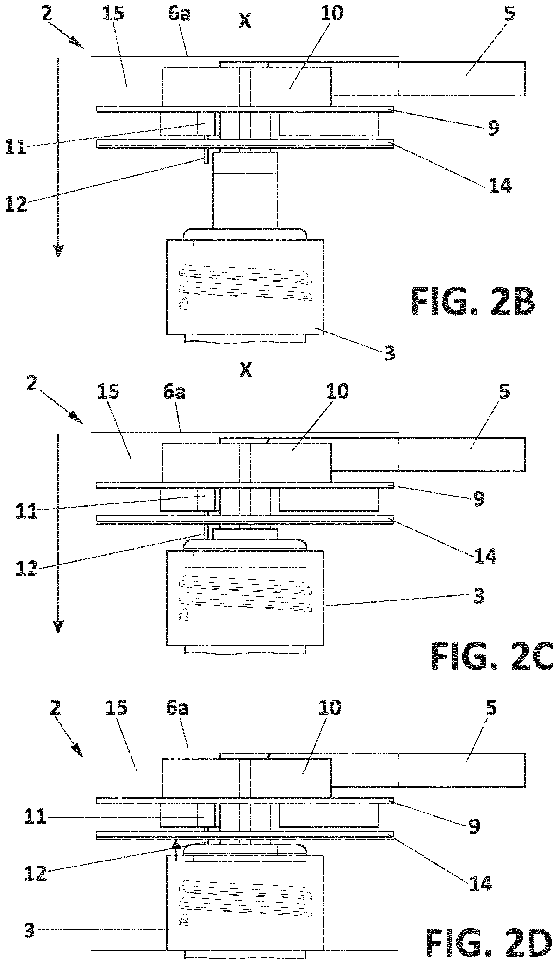

In the embodiment of Figure 2, the pump actuating cap (2) comprises a housing (6) having a top base (6a), a lateral wall (6b) an open bottom base (6c), and a nozzle (5) for the output of a product to be dispensed. The housing (6) is configured to be coupled with a conventional pump (7), in particular with an output tube (8) through the open bottom base (6c) to operate the pump by pressing-down the cap (2) in a known manner.

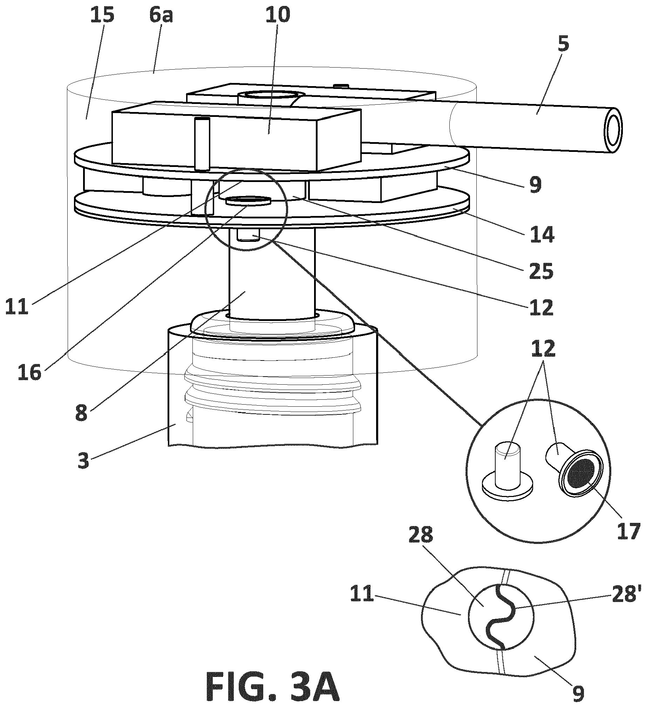

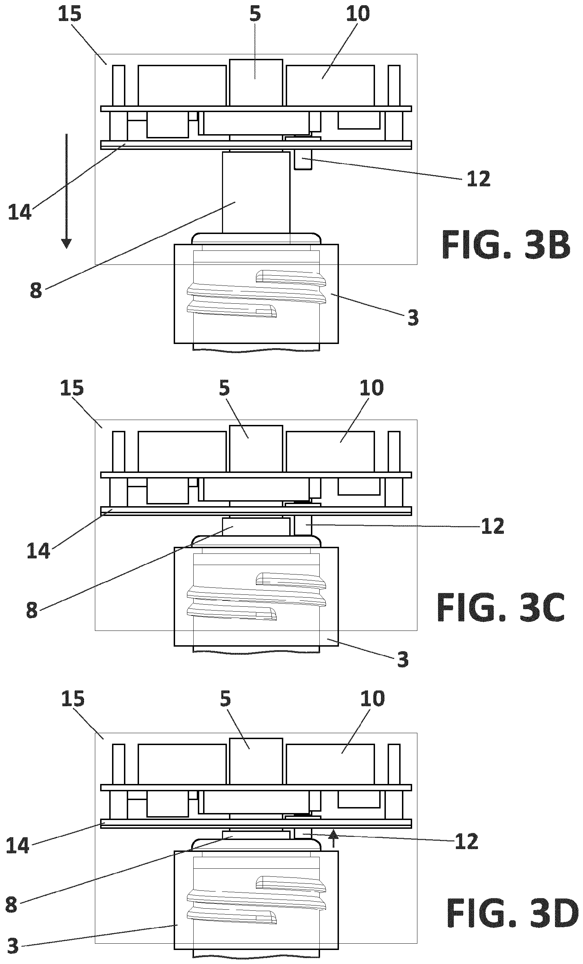

The cap (2) further comprises an electronic circuit (9), a power source such as batteries (10) to feed the electronic circuit (9), at least one antenna (not shown) connected with the electronic circuit (9). The cap (2) comprises an electric pulse generator realized as a push-button switch (11) in the embodiment of **Figures 2** and **3****.** The push-button switch (11) operates in a conventional fashion, that is, it has an actuating pin (12) and the switch is closed by pressing down the actuating pin (12) against the action of a spring, and when pressure is released, the actuating pin (12) returns to its initial positon pushed by the spring so the switch is opened.

The activation of the switch is used to count the number of pump activations, wherein a pulse is counted as a full pump activation.

The housing (6) a has a tubular sleeve (13) having an axis (X), which is fluidly communicated with a nozzle (5) of the cap (2), and adapted to be coupled with an output tube (8) of a pump (7). The push-button switch (11) is arranged in such a way that the actuating pin (11) is displaceable in a direction parallel to axis (X) of the sleeve (13) as shown more clearly in the sequence of **Figures 2B, 2C** and **2D****.**

The cap (2) includes a bottom cover (14), in the form of a circular plate, which is placed and fixed inside the housing (2), preferably parallel to the top base (6a), such as chamber (15) is formed internally in the housing (2) between the top base (6a), the lateral wall (6b) and the bottom cover (14). The battery (10), the electronic circuit (9) are enclosed inside the chamber (15), thus, they are isolated from the housing exterior.

The bottom cover (14) has a central opening (25) where the sleeve (13) is received, and a second opening (16) and the push-button switch (11) is arranged in such a way that the actuating pin (12) extends outside the chamber (15) through the second opening (16).

When the cap (2) is in its fully press-down position (**Figure 2D****)**, the push-button switch (11) is closed thereby activating the electronic circuit (9), and generating a pulse that it is counted by the electronic circuit (9).

The electronic circuit (9) has stored an unique identification code, and it is adapted to generate an RF signal containing the dispenser unique identification code and an actuation session code to be transmitted by the antenna.

In the embodiment of **Figure 3A****,** the push-button switch (11) is a conventional surface switch, having at least two fixed contacts (28,28') supported on a surface of a substrate like the PCB of the circuit (9), and a movable contact (17) provided on (the actuating pin (12) and contactable with the fixed contacts (28,28'). The actuating pin (12) is made of an elastic material, preferably silicone, and it is fitted at the second opening (16) of the bottom cover (14), so the push-button switch (11) is accessible to be operated (connected and disconnected) through the second opening (16) of the bottom cover (14) when the free end of the actuating pin (12) contacts the pump (7) as shown in the sequence of **Figures 3B-3D****.** The actuating pin (12) deforms when it is compressed by its contact with the pump body, and it recovers its shape due to its elasticity, when pressure on it is released.

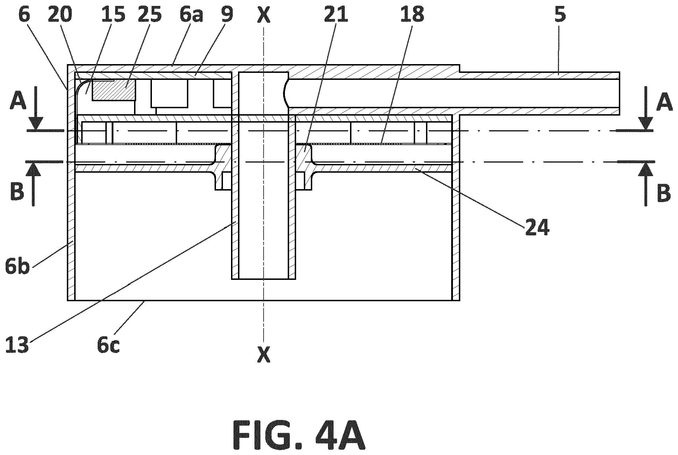

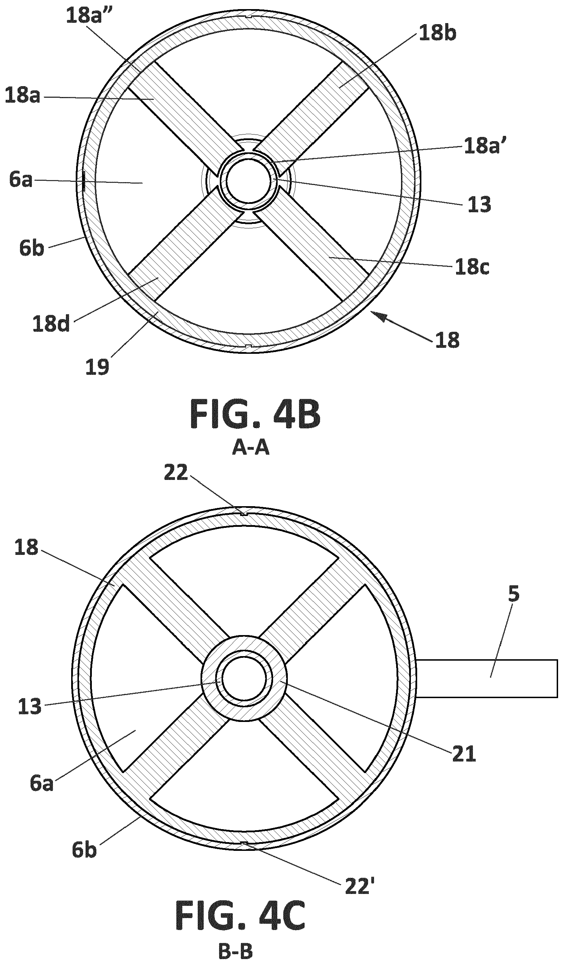

In the embodiment of **Figure 4** the electric pulse generator is embodied as piezo-electric member (18) that cooperates with a displaceable bottom cover (24), also in the form of a flat plate, to generate a pulse of electric current to activate the electronic circuit (9) and its subsequent processes up to the communication step (9). The displaceable bottom cover (24) is mounted inside the housing (6) in a displaceable manner to move relative to the housing (6), maintaining a parallel relative position with respect to the top base (6a).

In the embodiment of **Figure 4****,** a chamber (15) is also defined internally in the housing between the top base (6a), the lateral wall (6b) and the displaceable bottom cover (24), and the electronic circuit (9), the batteries (10) and the piezo-electric member (18) are enclosed in the chamber (15).

The piezo-electric member (18) is connected with the electronic circuit (9) by means of electric connection lines (20), for example a conventional flexible plastic having conductive strips supported thereon. Specifically, the piezo-electric member (18) is connected with an energy management module (25) of the electronic circuit (9) that operates in a known manner. The electric pulse generated by the piezo-electric member (18) which is in the form of alternating current, is first rectified for example by means of a diode and then stored in a capacitor, for example a supercapacitor, from which is used both to energize the electronic circuit and for counting a pulse.

The piezo-electric member (18) is arranged and configured such as the displacement of the bottom cover (24) actuates, that is, push on the piezo-electric member (18) that flexes or bend to generate an electric pulse.

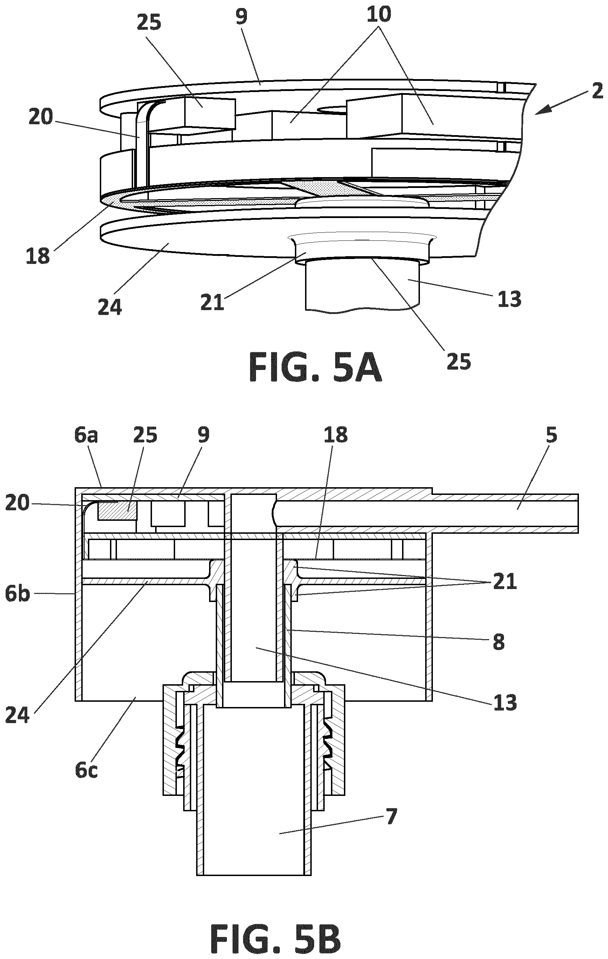

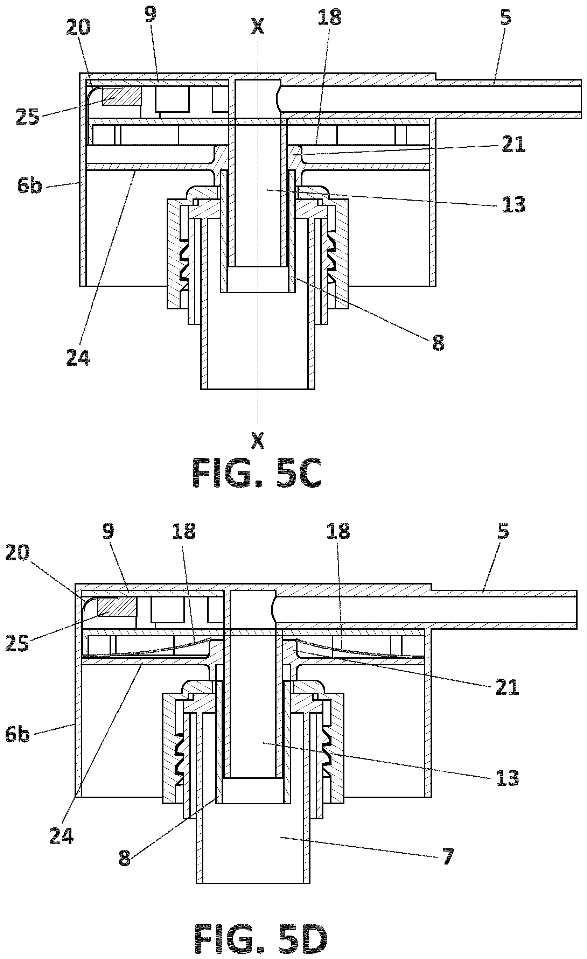

The piezo-electric member (18) is represented with more detail in **Figures 4B, 4C****.** The piezo-electric member (18) comprises at least one flexible tab (18a) (or blade) having two ends, a fixed end (18a") joined internally to the housing (6) and a free end (18a') arranged to be contacted by the displaceable bottom cover (24) when it moves towards the top base (6a) when an user press-down the cap (2). When the displaceable bottom cover (24) push the free end (18a'), the flexible tab (18a) is flexed (bended) as shown in **Figure 5D** thereby generating an electric pulse that is processed by the energy management module (25) as explained above to store energy, and also processed by the electronic circuit (9) to count the number of pump activations, by counting each pulse as a full pump activation within an actuation session.

When the user stop pressing the cap (2), the flexible tabs (18a, 18b, 18c, 18d) flex back and push the cap (2) upwards to its resting position of **Figure 4A****.**

Preferably, the piezo-electric member (18) is implemented as a generally flat unitary piece, comprising a ring (19) fixed internally to the housing lateral wall (6b), and four flexible tabs (18a, 18b, 18c, 18d) equidistantly arranged and radially extending in the ring (19) and all connected at one end with the ring. One end of the flexible tabs (18a, 18b, 18c, 18d) is connected with the ring (19), and a free end of the tabs extend towards the center of the ring (19) until the sleeve (13), as it can be observed for instance in **Figure 5B****.**

The piezo electric member is designed to connect internally all the piezo electric strips/taps mounted on it. The number of piezo-electric tabs is selected depending on the required electric power for each application.

The displaceable bottom cover (24) is provided with a neck (21) around the central opening (25) of the displaceable bottom cover (24), that projects orthogonally from the upper and lower surfaces of the cover (24) to assure that the displaceable bottom cover (24) contact simultaneously with the four flexible tabs (18a,18b,18c,18d) right at their free ends. Additionally, the neck (21) is configured to embrace externally the sleeve (13) so as to slide on the external surface of the sleeve (13), so the vertical movement of the displaceable bottom cover (24) is guided by the sleeve (13).

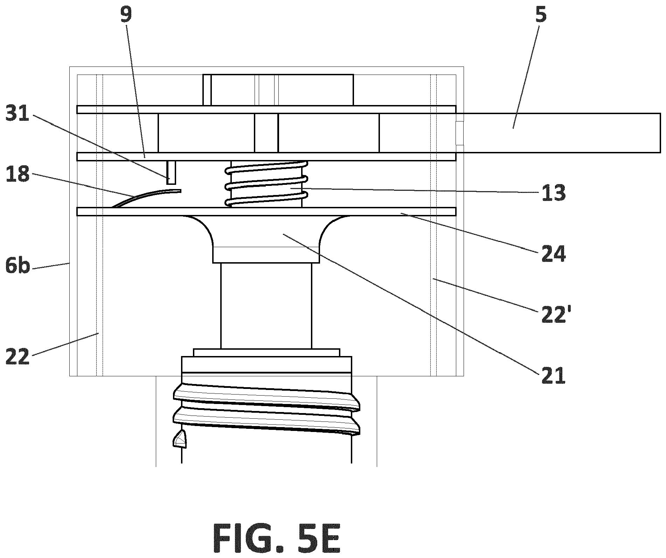

**Figure 5E** shows an alternative embodiment in which the piezo-electric member (18) is mounted with the displaceable bottom cover (24), thus, both components member and cover (18,24) are jointly displaceable. As in the previous embodiment, the piezo electric member (18) is connected with the electronic circuit (9) to act as the power source to activate the electronic circuit when an electric pulse is generated and for counting pulses. A protrusion (31), for example an electric terminal is connected with the electronic circuit (9) for contacting and bending the piezo-electric member (18).

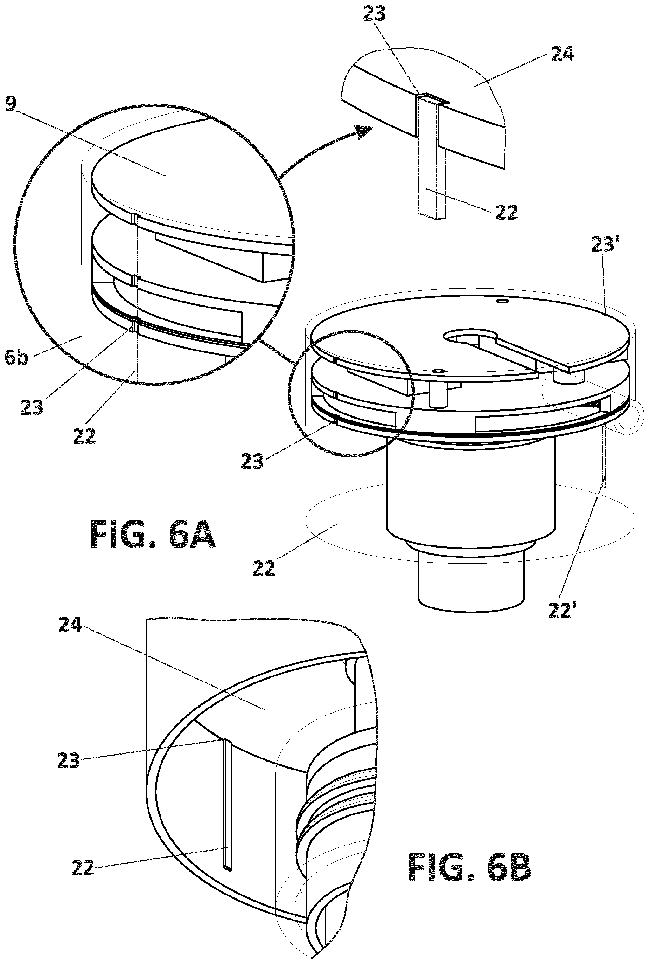

In addition to the neck (21) and sleeve (13), the cap (2) incorporates complementary guiding means to guide the movement of the displaceable bottom cover (24). These complementary guiding means are shown in **Figures 6A,6B** and comprises two or more straight nerves (22,22') formed on the internal surface of the lateral wall (6b) of the housing (6), and vertically arranged (parallel to the axis (X)), and diametrically opposed in the housing (6) considering that the housing is a cylindrical body.

In turn, the displaceable bottom cover (24) has two notches (23,23') placed in correspondence with the nerves (22,22'), so that the nerves (22,22') are placed inside the notches (23,23'), so that the displaceable bottom cover (24) moves up and down vertically guided by the nerves (22,22') with a desired movement relative to the position of the piezo-electric member to optimize the piezo-electric member bending and maximize energy generation.

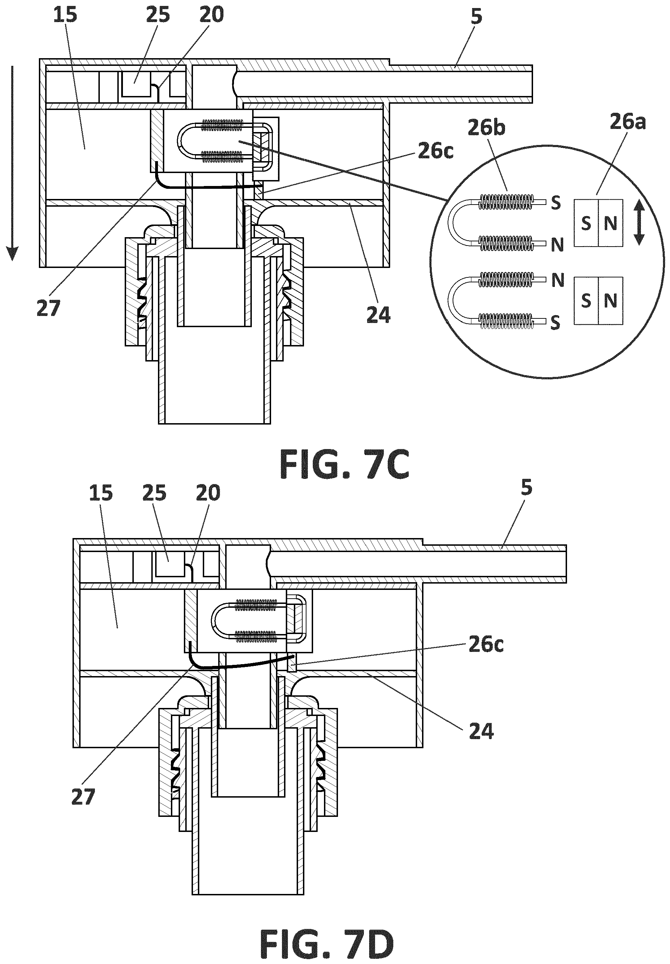

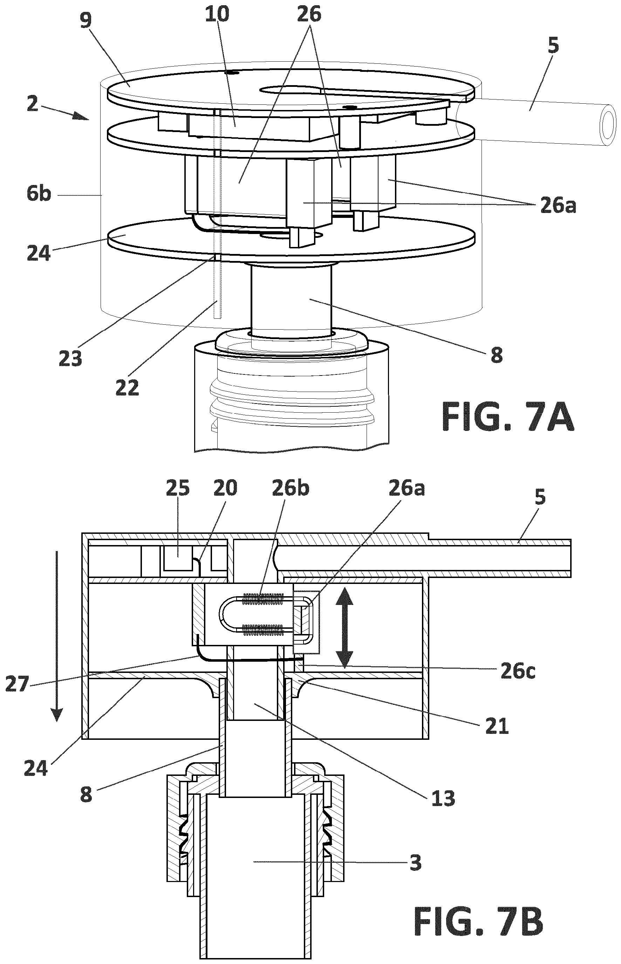

The preferred embodiment of **Figure 7** is similar to the embodiment of **Figures 4-6****,** but the piezo-electric element (18) is replaced by at least one an energy harvest device (26) also enclosed inside the chamber (15). Therefore, in this embodiment the electric pulse generator comprises also the displaceable bottom cover (24) as the one described above, mounted inside the housing (6) in a displaceable manner, and including a neck (21) and the guiding means, namely the cooperating nerves (22,22') notches (23,23') for the guided vertical movement of the displaceable bottom cover (24).

The electric pulse generator also includes in this case two energy harvest devices (26), connected in series or in parallel, which are known devices, commercially available, that are capable of transforming mechanical energy into an electric pulse. The present patent application does not encompass the energy harvest devices (26) disclosed in the figures.

More in detail, the energy harvest devices (26) represented in **Figure 7A**-**D**, includes a movable magnetic actuator (16a) displaceable with respect to an inductive generator (16b) that transform mechanical force into an inductive voltage pulse. The movable magnetic actuator (16a) has a magnet, and it is moved reciprocately near a pair of inductors as shown in **Figure 7C****,** so as the magnet moves, a magnetic flux is induced in the inductors thereby generating an electric pulse. The energy harvest devices (26) are connected with an energy management module (25) of the circuit (9) by means of a connection line (20), such as the module (25) converts the voltage pulse to a constant operating voltage in a known manner. (As explained above, the energy management module (25) rectifies the alternating pulses generated by the energy harvest devices, and stores the rectified energy in a super-capacitor.

The magnetic actuator (16a) is displaceable between the two positions shown in **Figures 7C,7D****,** and it has a feet (6c) that is contactable by the displaceable bottom cover (24). The displacement of the bottom cover (24) activates the energy harvest devices (16) to generate an electric pulse that it is used both to store energy for energizing the electronic circuit, and for counting the number of pump activations, wherein a pulse is counted as a full pump activation. energy management module (25) of the electronic circuit (9)

Each energy harvest device (16) has a flexible member (27) arranged to press the displaceable bottom cover (24) away from the top base (6a).

In all the above described embodiments, the electronic circuit (9) comprises operatively intercommunicated: an energy management module (25), a processor, a communication module, and a memory storing the unique identification code, and wherein the electronic circuit is adapted for counting the number of activations of the electric pulse generator (pulses generated by the switch device), and to transmit an electric signal containing the dispenser unique identification code and a pump session activation code containing information relative to the number of the switch device activations in that specific session.

When the cap (2) is operatively coupled with a pump (3), the cap is displaceable between two end positions, a resting position and a pressed-down position, such as when the cap reaches the pressed-down position, a metered dose of product has been dispensed through the nozzle. The switch device is arranged in such a way that when the pump actuating cap reaches its pressed-down position the switch device is activated (closed) by contacting (the switch actuating pin, or the displaceable button-cover) with a part of the pump body. When the cap is in its resting position, the switch is des-activated.

While the switch is des-activated, for example position of the switch in, the integrated circuit is in a sleep mode and there is no power (or ultra-minimal) consumption. In the run mode, the integrated circuit is powered, and a pump activation counting session is initiated, in which a counter of for example 5 seconds is started and if no further activations of the pump are carried out, the session is concluded and a signal containing the session code, number of pushes and the identification code is transmitted.

If within the 5 seconds count, more pump activations are detected, the number of activations are counted and the timer is reset, so after 5 seconds without further pump activations, the session is concluded and signal is containing the session code and a signal containing the dispenser unique identification code and a session activation code, is transmitted by the antenna or antennas When the pump actuator is released from the pressed-down position, the switch is des-activated, and the circuit returns to the sleep mode after transmitting the RF signal.

The processing unit is manufactured with a unique identifier number, and this number is used as the dispenser unique identification code. The processing unit converts the code in binary digital data representing each actuation (level zero data), and the processor is programed to take and process this level zero data, execute specific routines to virtually represent usage sessions of the product, encrypts that information and then send this Level 1 pre-processed data to the communications unit of the product that in turns send it to a central processing platform through a long range cellular radio network. The energy consumption to perform this simple calculation is very reduced compared with prior art systems that require to energy and measure sensors.

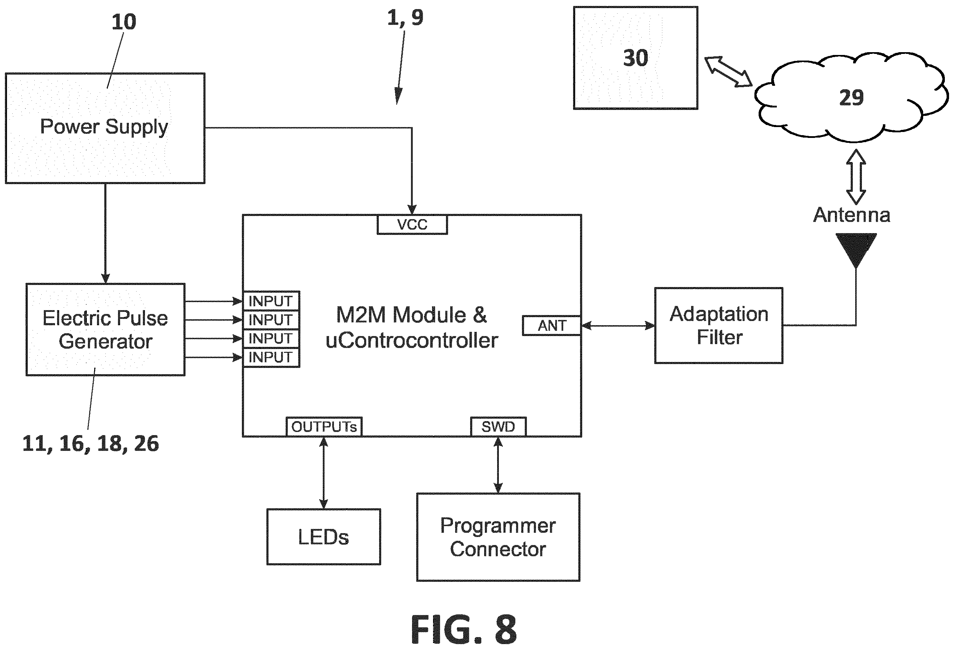

A system according to the invention for remote monitoring of product consumption is also represented in **Figure 8****.** The system comprises at least one pump dispenser (1) as the one defined above including any of the described alternatives, and a remote central monitoring platform (30) communicated through a communication network (29) with the plurality of pump dispensers. The central monitoring platform (30) is adapted to receive and process signals containing the dispenser unique identification code and a pump activation session code (containing the number of pump activations or intermediate activations), transmitted by each of the pump-actuated dispensers, preferably the central monitoring platform is adapted to calculate for each specific dispenser remaining product quantity, such as product consumption is derived simply by counting the number of full or partial activations of the compression pump.

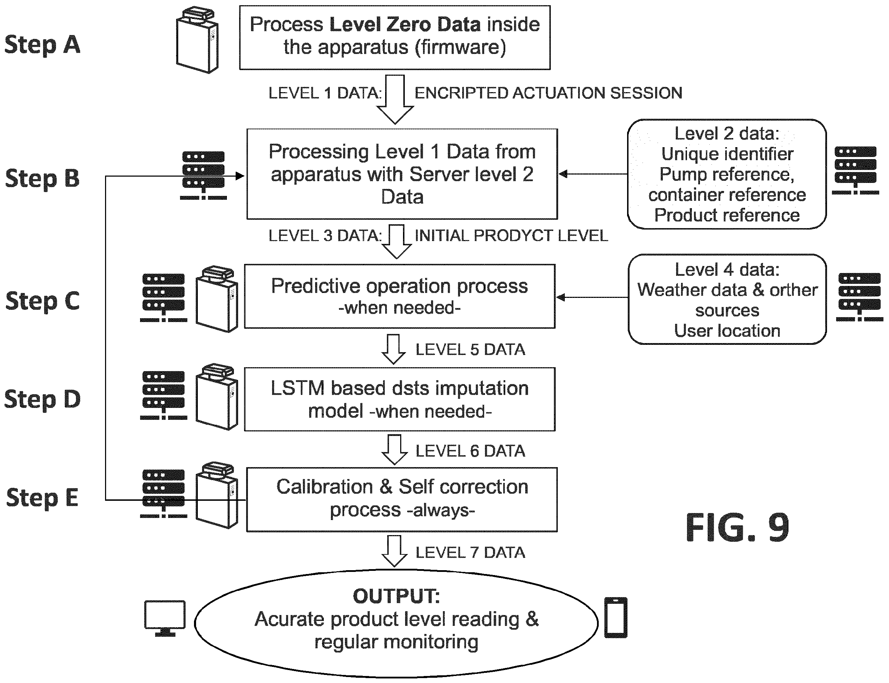

**Figure 9** illustrates the method according to the invention. The process is as follows:

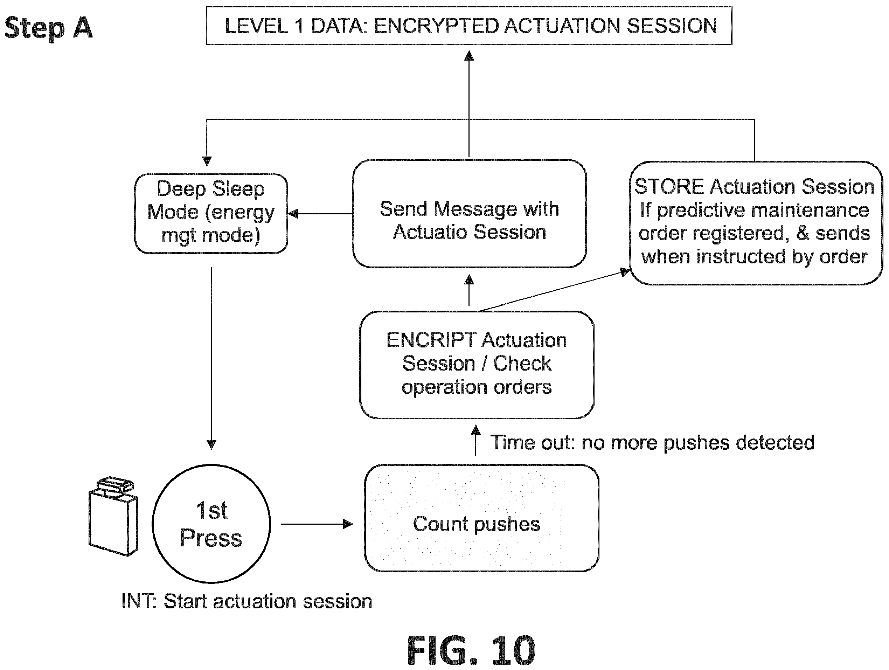

### STEP A: Data of the pump activation code and data of the actuation session. Process to generate Level One Data inside the dispenser. Figure 10.

As shown in **Figure 10****,** when the compression pump is pressed down by a user (Level Zero Data inside the dispenser) to dispense an amount of product, the electronic circuit turns from the sleep mode to the run mode, and the pump activation counting session is initiated as explained above to count one or more activations (pushes). This activations in full activations and intermediate activations, depending on which input of the electronic circuit is activated by a line of the switch. After a certain time has elapsed without further activations, the counting session is concluded and a pump activation session code is created including the number of counted activations and the type thereof, and this code together with the dispenser unique identification code are encrypted and prepared for its transmission.

Before sending the signal, the circuit check whether any operation order has been received from the central monitoring platform, for example a predictive operations order. In case such an order has been received, the actuation session code is temporarily stored, and an operations order or any other process is executed, and when concluded, the signal is transmitted as Level One Data (encrypted actuation session) and the circuit returns to the sleep mode to save energy.

Immediately after a first press is noticed, a pump activation code is produced, and once the system has confirmation of no further pushes, an actuation session information is generated (Level zero data), including a time & date stamp, the total number of pushes data, a sequential number for each push/press, and the unique ID number of the remote monitoring dispenser.

The actuation session is further encrypted to increase security of the data to be transmitted, and the encrypted actuation session is transmitted to the Central Monitoring Platform (CMP), unless there is a previous predictive operation order received by the processor, in which case the actuation session is stored in the memory for a later use.

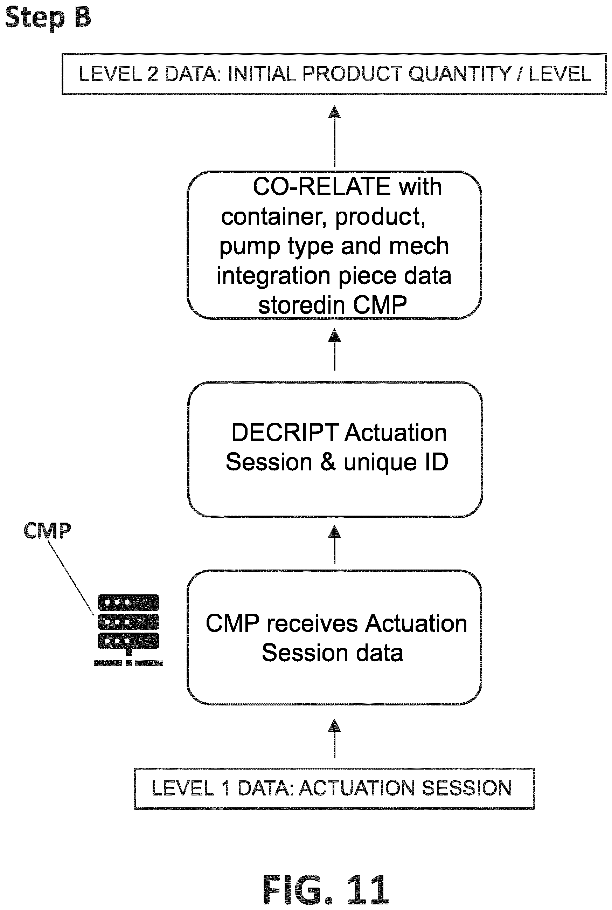

### STEP B: Remote production of initial product quantity / level in the external central monitoring platform. Process to generate Level Two Data at the Central Monitoring Platform (CMP). Figure 11

As represented in **Figure 11** the Central Monitoring Platform (CMP) receives and process the Level One Data from each dispenser, decrypt the received signal and link it / co-relate it to specific data related to a client unique id, encryption tables, container type and capacity, metered / unmetered pump model, and it is capable of producing accurate microliters measure of the product dispensed and level / quantity of product remaining in the container to generate Level Two Data related to product quantity / level.

It has have found that occasionally, under some weather variable conditions, the cellular networks used are not able to reliably transmit Level 1 data to the Central Monitoring Platform (CMP). To prevent this, machine learning techniques are used for training the system to predict when a Level 1 data is not going to be properly transmitted through the cellular network, and the (CMP) instructs exceptionally the pump-actuated processor not to send the signal in real time, but store it in memory and transmit it at later time, only when the predicted/real weather conditions are stable and right again for the transmission. In this way, the quality of the product level / quantity determination is ensured and continuous and qualitative monitoring is achieved.

In the eventual and much less likely case that an actuation is still lost and does not arrive to the (CMP), as every actuation is assigned a unique digital counter number with a certified date & time, the system is able to understand when that actuation was lost and re-fill it in the right most predictable position to have a reliable time series of events and ensure the accurate product level/quantity measure over time, and battery status constant monitoring.

Once the actuation session information is received by the central monitoring platform, it first proceed to decrypt it, and then integrates and co-relates that data with other stored in it comprising the exact pump model reference, and the container reference that is physically attached to it, and the product reference, producing an accurate measure of the actual product quantity / level in microlitres, millilitres, or grams, still stored in the container that can be accessed through any mobile device (PC,Tablet, Smartphone or equivalent) or other Central Processing platforms. By knowing the part number of a specific dispenser being monitored, the type of container and its capacity can be readily determined, for example: 50 ml, 65 ml, 100 ml, 500 ml, 1 liter etc.

In case the pump is not metered, the dosage of each push contained in an actuation session is specifically measured based in the data from the mechanical integration of the switch by knowing which of its terminals have been activated, to be sent as part of the actuation session package.

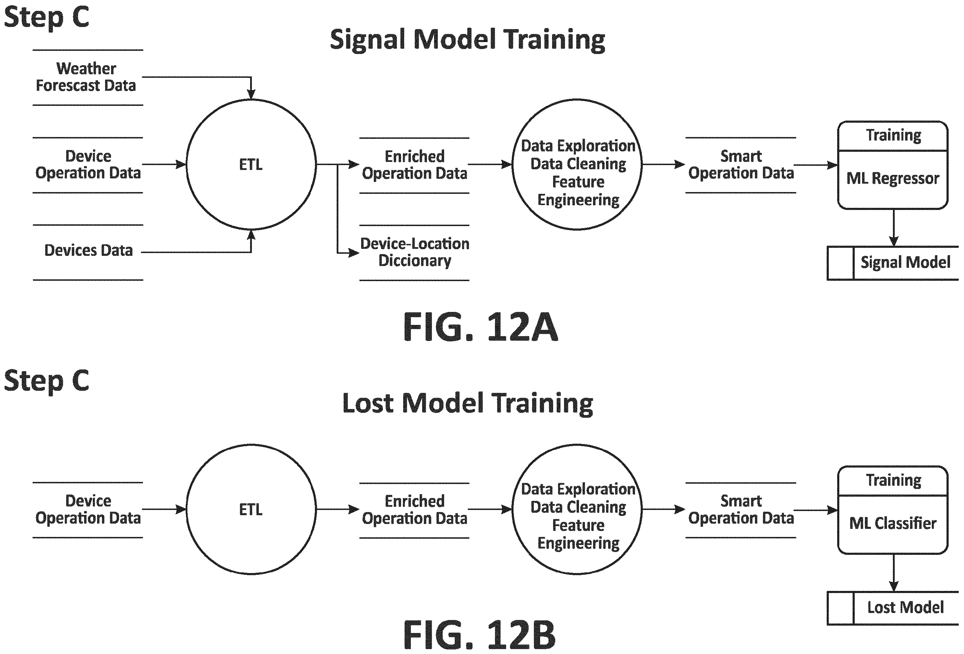

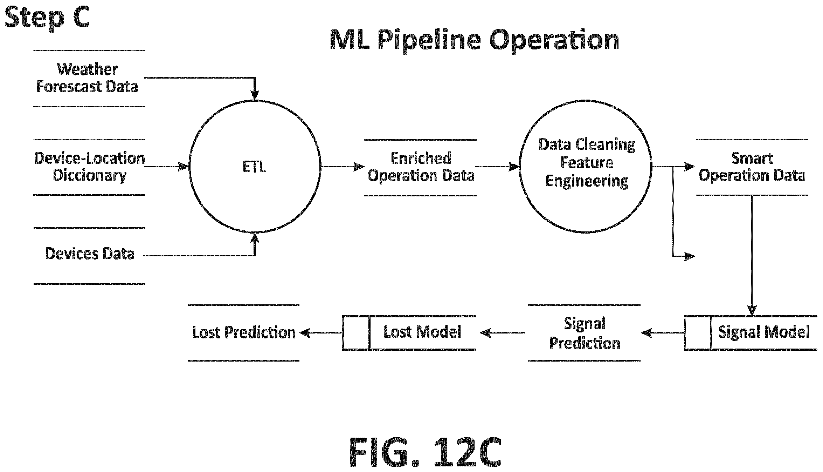

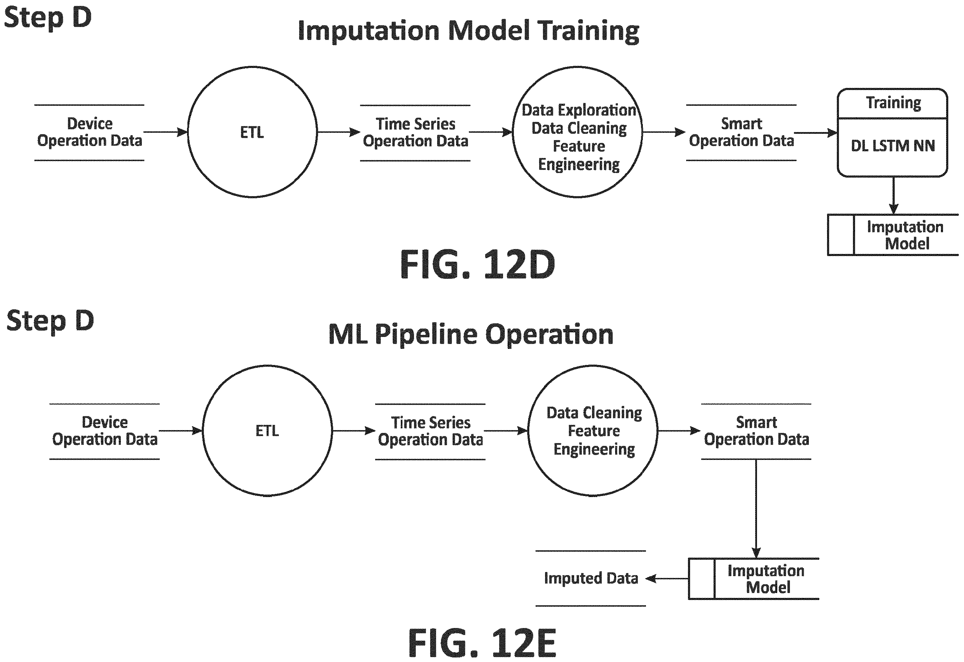

### STEP C - Predictive operation process. Figure 12A

The purpose of this process is to determine if near-future local weather conditions would affect radio communications between dispensing devices and stations - resulting in messages being lost - and if so, set any involved devices to store the information collected within this timeframe until the expected end of the condition. Based in the lab tests and experience, it is important to anticipate whether conditions impact in the Low Power Wide Area Networks technology quality of radio signal. This is especially important in un-regulated radio spectrums like Lora / Sigfox / Ingenu and the likes, but also in Narrow Band IOT, LTE.....

To achieve a relevant prediction between a particular weather forecast and an expected lost/not lost communication, Machine Learning techniques are used at the level of the Central Monitoring Platform. Location of each dispensing device is known with accuracy, latitude and longitude based.
- On development, two machine learning models will be trained from historic data from both past weather forecasts and the quality of the received signal of the dispensing device operation messages sent - including those never received.
- On operation, new weather forecast data will be continually introduced in the pretrained machine learning pipeline, resulting in a prediction of lost/not lost being produced for a given geographic area. This prediction will then be used accordingly to take action on any devices operating within that area, sending a predictive maintenance order to the remote monitored dispenser when needed.

The first Machine Learning model to be trained is a multivariate-regressor that is able to predict signal condition from weather forecast data per location, day of the week and hour of the day.

To achieve this, the training data will combine weather forecast data (like temperature, humidity, cloudiness, ...), device operation data (like longitude/latitude) and device characteristics (like Antenna Type) after a data-engineer process of data transformation & integration of the different data sources, and a data-scientist driven process of data cleaning & feature engineering.

The labels to be learned will represent the strength of the signal and will come from device operation data (SNR, RSSI, ...)
The second Machine Learning model to be trained is a binary classifier that is able to predict a lost/not lost condition from a given signal condition.

For this model, training data will only require device operation data related to the strength of the signal (SNR, RSSI, ...) after a data-engineer process of data transformation and a data-scientist driven process of data cleaning & feature engineering.

The labels to be learned will be whether the message was lost or not and will come from device operation data that includes lost messages data from the devices themselves.

Also, the models themselves will be built testing several Machine Learning and Deep Learning algorithms like Logistic/Linear Regression, Random Forests, Neural Networks, all of them of a supervised nature.

Prediction of a lost/not lost condition from a given weather forecast will happen per location and date imputing the weather forecast data to the first trained model and its outputs to the second trained model to achieve a lost/not lost prediction for this location and date (hourly).

After repeating the process for all the locations of interest and for the different hours of the day, for a whole week, the complete table of locations-days & hours will be filled with lost/not lost predictions.

This information will then be used based in the lost prediction to inform any devices belonging to any location with a Predictive operations/maintenance order, including the expected beginning and end of the condition so they store messages within this timeframe.

Once the timeframe is over, devices will resume normal operation unless an updated forecast extending the condition is received.

### STEP D - Data imputation process to earn accuracy. Figure 12D

For the unlikely event that after the predictive operation/maintenance process, any actuation session or a part of it is lost, an additional data imputation process is designed in the Central Monitoring Platform.

The purpose of this data imputation process is to fill any missing gaps existing in the received operation data formed by the actuation sessions content that due to communication conditions are resulting in loss of data.

Conventional approaches for imputing missing data, leverage algorithms like ARMA or ARIMA which assume a linear behaviour of the time series. Machine learning models using this algorithms are simple to implement and quick to run, but cannot capture a sudden wave in the periods of missing values/pushes as they assume the data is smooth and the pattern well defined.

To achieve a good imputation of missing data when it exhibits no stationary behaviour - there is not a clear pattern - or includes sudden level shifts - there are micro patterns - Deep Learning techniques for time series analysis will be used.

Using state-of-the-art Deep Learning techniques like LSTM (long-short term memory) neural networks, removes any assumptions on the data (stationary, no level shifts) and allows us to capture non-linear trends that would otherwise be missed. This will probe to be a key factor on achieving and accurate imputation given our expected data.
- On development, a Long Short Term Memory (LSTM) neural network is built to model the time series pattern of usage per device attending to the day of the week, hour of the day and if it is a bank holiday or not - for received data.
- On operation, when a missing value is detected (actuation sessions and continuous sequence on origin of presses, eases detection on skipped) the number of missing values and the time-window for them to have happened will be imputed into the trained neural network which will them output the most probable time for them to have occur. This way, the model replicates the most likely behaviour of the remotely monitored container user and also is able to compute and deliver a very accurate final control measure of the product level/quantity as a final step of the process.

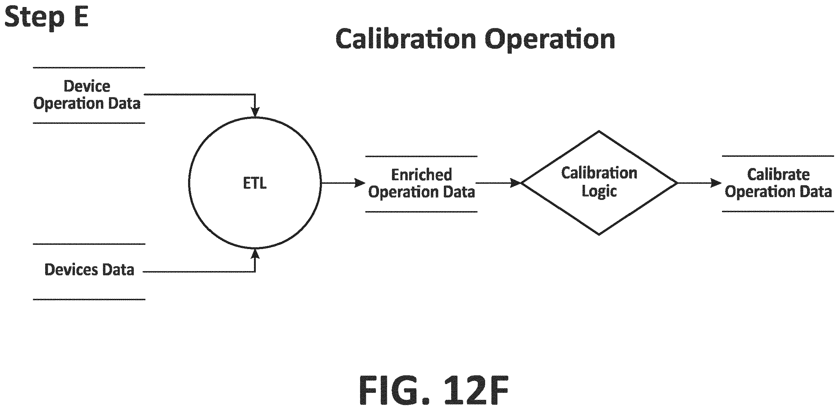

### STEP E: Calibration process. Figure 12 F.

In most cases, the quality or properties of the product stored in the container will be affected by the environmental conditions of the location of dispenser storage. In case of water, alcohol, or essential components evaporating over time due to the storing conditions, this can affect the viscosity of the product and its properties, as well as its fragrance concentration and product / liquid level which is another factor affecting the remote monitoring of product consumption if an accurate measure wants to be constantly produced. It is known in the affected industries, that even with crimped pumps and moisture / humidity isolated pumps, there can be a given level of product properties degradation and loss over time.

It is for this reason that there is also a dispensing device calibration process that is able to co-relate the readings of the ambient & temperature conditions where the device is located obtained by the sensors attached to the device (i.e. humidity and temperature) with the evaporation and loss of properties of the specific "in-container" product data properties that are stored in the central monitoring platform.

The output of this Step can be used also for preventing inappropriate use of the product by the user/patient, but the relevance for this invention strives in its assistance to provide an even more accurate remote monitoring of product level/quantity, so when the conditions are met, the system over-writes the actual measures obtained in the previous steps considering the impact of this factors.
- The calibration process combines device operation data (like temperature or humidity) with device data (like container type) and applies a well-defined calibration correction to obtain the calibrated values more precisely matching the real measure of the device operation data.

The Steps and processes under A to E are iterated over time in connection to the Central Monitoring Platform, so an actual constant remote monitoring of the product quantity / level with accuracy it is possible.

### CLAUSES

1.- A pump actuating cap for a pump dispenser, the cap comprising:
   a housing having a top base, a lateral wall, an open bottom base, and a nozzle for the output of a product to be dispensed, and wherein the housing is configured to be coupled with a pump through the open bottom base, to operate the pump,
   the cap further comprising: an electronic circuit, at least one antenna connected with the electronic circuit, and at least one electric pulse generator connected with the electronic circuit, and wherein the circuit, the antenna and the electric pulse generator are enclosed inside the housing,
   wherein the electric pulse generator is arranged to be actuated through the open bottom base of the housing, by contacting with a pump when the housing is operatively coupled with a pump,
   wherein the electronic circuit has stored an unique identification code usable to identify the pump actuating cap, and
   wherein the electronic circuit is adapted for counting the number of pulses generated by the electric pulse generator, and to generate a signal containing the dispenser unique identification code and a pump session activation code containing information relative to the number of counted pulses, and to transmit the signal through the antenna.
2.- A cap according to clause 1, further comprising a power source connected to the electronic circuit, and wherein the electric pulse generator is a push-button switch having an actuating pin, and wherein the housing a has a tubular sleeve having an axis (X) which is fluidly communicated with the nozzle and adapted to be coupled with an output tube of a pump, and wherein optionally the push-button switch is arranged in such a way that its actuating pin is displaceable in a direction parallel to axis (X) of the sleeve.
3.- A cap according to clause 2, further comprising a bottom cover placed inside the housing and fixed to the housing, wherein the housing has a chamber formed internally between the top base, the lateral wall and the bottom cover, and wherein the power source includes at least one battery or supercapacitors, and wherein the electronic circuit and the battery are enclosed inside the chamber, and wherein the bottom cover has an opening and the push-button switch is arranged in such a way that the actuating pin extends outside the chamber through the opening, or wherein the actuating pin is displaceable inside the chamber and it is arranged to be accessible through the opening for its activation.
4.- A cap according to clause 2, wherein the push-button switch has at least two fixed contacts supported on a surface of a substrate and a movable contact provided on the actuating pin and contactable with the fixed contacts, wherein the actuating pin is made of an elastic material.
5.- A cap according to clause 1, wherein the electric pulse generator comprises at least one piezo-electric member and a displaceable bottom cover mounted inside the housing in a displaceable manner such as the bottom cover is displaceable relative to the housing, and wherein the piezo-electric member is arranged such as the displacement of the bottom cover actuates the piezo electric member to generate an electric pulse and wherein the piezo electric member is connected with the electronic circuit to act as the power source to activate the electronic circuit when an electric pulse is generated, and wherein optionally the piezo-electric member is attached to the housing or it is mounted with the displaceable bottom cover.
6.- A cap according to clause 5, wherein a chamber is defined internally in the housing between the top base, the lateral wall and the displaceable bottom cover, and wherein the electronic circuit and the piezo-electric member are enclosed inside that chamber, and wherein the piezo-electric member comprises at least one flexible tab arranged with respect to the displaceable bottom cover, in such a way that the piezo-electric flexible tab is flexed by the displacement of the bottom cover when it moves towards the top base.
7.- A cap according to clause 5 or 6, wherein the piezo-electric member comprises a ring and at least one flexible tab radially extending in the ring, the flexible tab having one external end joined with the ring and an internal end arranged to be contacted by the displaceable bottom cover.
8.- A cap according to clause 1, wherein the electric pulse generator comprises at least one energy harvest device including an inductive generator capable of transforming mechanical energy into an electric pulse, the electric pulse generator further comprising a displaceable bottom cover mounted inside the housing in a displaceable manner such as the bottom cover is displaceable relative to the housing, and wherein the energy harvest device is arranged such as the displacement of the bottom cover activates the energy harvest device to generate an electric pulse, and wherein the energy harvest device is connected with the electronic circuit to generate electric pulses to be counted by the electronic circuit.
9.- A cap according to clause 8, wherein the displaceable bottom cover is displaceable with respect to the housing and wherein a chamber is defined internally in the housing between the top base, the lateral wall and the displaceable bottom cover, and wherein the electronic circuit and the energy harvest device are enclosed inside the chamber, and wherein the energy harvest device has an flexible member arranged to press the displaceable bottom cover away from the top cover.
10.- A cap according to any of the clauses 5 to 9, wherein the housing has a tubular sleeve having an axis (X) and fluidly communicated with the nozzle and adapted to its coupling with the output of a pump, and wherein the displaceable bottom cover extends around the tubular sleeve, and wherein the housing and the displaceable bottom cover are configured such as the displacement of the bottom cover is guided by the tubular sleeve and an internal surface of the lateral wall of the housing.
11.- A pump dispenser comprising a pump actuating cap as the one defined in any of the preceding clauses, and a pump dispenser operatively coupled with the cup,
   wherein the cap is displaceable between two end positions, a resting position and a pressed-down position, such as when the cap reaches the pressed-down position, a metered dose of product has been dispensed through the nozzle,
   and wherein the electric pulse generator is arranged in such a way that when the pump actuating cap reaches its pressed-down position, the electric pulse generator generates an electric pulse by contacting with a part of the pump body.
12.- A pump dispenser according to clause 11, further comprising a container containing a product to be dispensed, and wherein the product is in the form of a liquid, foam, cream or gel, including a perfume and/or a cosmetic composition.
13.- System for remote monitoring of product consumption, comprising at least one pump dispenser as the one defined in clause 11 or 12, and a remote central monitoring platform communicated through a communication network with the at least one pump dispenser, wherein the central monitoring platform is adapted to receive and process signals containing the dispenser unique identification code and a pump activation session code, transmitted by the pump dispenser, and wherein the central monitoring platform is adapted to calculate for each specific dispenser remaining product quantity, based on the counted pulses that correspond to the number of activations of the compression pump.
14.- Method for remote monitoring of product consumption using the pump dispenser defined in any of the clauses 11 or 12, comprising the steps of:
   counting in the cap, the number of pulses generated by the electric pulse generator, wherein each electric pulse activation corresponds to a known amount of dispensed product,
   generating a signal containing a pump actuation session containing information about full pump activations, and a dispenser unique identification code,
   and transmitting said signal to a central monitoring platform.
15.- Method according to clause 14 further comprising the step of receiving and processing in the central monitoring platform (CMP) the signal transmitted by the pump-actuated dispenser,
   wherein the step of processing comprises co-relating the received information with information stored in the central monitoring platform for the dispenser from which the information has been received, wherein the stored information contains historic information of product quantity in the dispenser, and
   calculating in the central monitoring platform (CMP) the remaining quantity of product inside the dispenser.

## Claims

1. A pump actuating cap (2) for a pump dispenser (1), the cap comprising:
a housing (6) having a top base (6a), a lateral wall (6b), an open bottom base (6c), and a nozzle (5) for the output of a product to be dispensed, and wherein the housing (6) is configured to be coupled with a pump (7) through the open bottom base (6c), to operate the pump (7),
the pump actuating cap (2) further comprising: an electronic circuit (9), at least one antenna connected with the electronic circuit (9), and at least one electric pulse generator connected with the electronic circuit (9), and wherein the circuit, the antenna and the electric pulse generator are enclosed inside the housing (6),
wherein the electric pulse generator is arranged to be actuated through the open bottom base (6c) of the housing (6), by contacting with a pump (7) when the housing (6) is operatively coupled with a pump (7),
wherein the electronic circuit (9) has stored an unique identification code usable to identify the pump actuating cap (2), and
wherein the electronic circuit (9) is adapted for counting the number of pulses generated by the electric pulse generator, and to generate a signal containing the dispenser unique identification code and a pump session activation code containing information relative to the number of counted pulses, and to transmit the signal through the antenna, **characterized in that**,
the electric pulse generator comprises at least one piezo-electric member (18) and a displaceable bottom cover (24) mounted inside the housing (6) in a displaceable manner such as the bottom cover (24) is displaceable relative to the housing (6), and wherein the piezo-electric member (18) is arranged such as the displacement of the bottom cover (24) actuates the piezo electric member to generate an electric pulse and wherein the piezo electric member is connected with the electronic circuit (9) to act as the power source to activate the electronic circuit (9) when an electric pulse is generated, and wherein optionally the piezo-electric member (18) is attached to the housing (6) or it is mounted with the displaceable bottom cover (24).

2. A pump actuating cap (2) according to claim 1, wherein a chamber (15) is defined internally in the housing (6) between the top base (6a), the lateral wall (6b) and the displaceable bottom cover (24), and wherein the electronic circuit (9) and the piezo-electric member (18) are enclosed inside that chamber (15), and wherein the piezo-electric member (18) comprises at least one flexible tab (18a) arranged with respect to the displaceable bottom cover (24), in such a way that the piezo-electric flexible tab (18a) is flexed by the displacement of the bottom cover (24) when it moves towards the top base (6a).

3. A pump actuating cap (2) according to claim 1 or 2, wherein the piezo-electric member (18) comprises a ring (19) and at least one flexible tab (18a) radially extending in the ring (19), the flexible tab (18a) having one external end joined with the ring (19) and an internal end arranged to be contacted by the displaceable bottom cover (24).

4. A pump actuating cap (2) according to any of the claims claim 1 to 3, wherein the housing (6) has a tubular sleeve (13) having an axis (X) and fluidly communicated with the nozzle (5) and adapted to its coupling with the output (8) of a pump (7), and wherein the displaceable bottom cover (24) extends around the tubular sleeve (13), and wherein the housing (6) and the displaceable bottom cover (24) are configured such as the displacement of the bottom cover (24) is guided by the tubular sleeve (13) and an internal surface of the lateral wall (6b) of the housing (6).

5. A pump dispenser (1) comprising a pump actuating cap (2) as the one defined in any of the preceding claims, wherein the pump dispenser (1) is operatively coupled with the pump actuating cap (2),
wherein the pump actuating cap (2) is displaceable between two end positions, a resting position and a pressed-down position, such as when the pump actuating cap (2) reaches the pressed-down position, a metered dose of product has been dispensed through the nozzle (5),
and wherein the electric pulse generator is arranged in such a way that when the pump actuating cap (2) reaches its pressed-down position, the electric pulse generator generates an electric pulse by contacting with a part of the pump (7) body.

6. A pump dispenser (1) according to claim 5, further comprising a container (4) containing a product to be dispensed, and wherein the product is in the form of a liquid, foam, cream or gel, including a perfume and/or a cosmetic composition.

7. System for remote monitoring of product consumption, comprising at least one pump dispenser (1) as the one defined in claim 5 or 6, and a remote central monitoring platform communicated through a communication network with the at least one pump dispenser (1), wherein the central monitoring platform is adapted to receive and process signals containing the dispenser unique identification code and a pump activation session code, transmitted by the pump dispenser (1), and wherein the central monitoring platform is adapted to calculate for each specific dispenser remaining product quantity, based on the counted pulses that correspond to the number of activations of the compression pump.

8. Method for remote monitoring of product consumption using the pump dispenser defined in any of the claims 5 or 6, comprising the steps of:
counting in the pump dispensing cap (2), the number of pulses generated by the electric pulse generator, wherein each electric pulse activation corresponds to a known amount of dispensed product,
generating a signal containing a pump actuation session containing information about full pump activations, and a dispenser unique identification code,
and transmitting said signal to a central monitoring platform (30).

9. Method according to claim 8 further comprising the step of receiving and processing in the central monitoring platform (CMP) (30) the signal transmitted by the pump-actuated dispenser (1),
wherein the step of processing comprises co-relating the received information with information stored in the central monitoring platform (30) for the dispenser from which the information has been received, wherein the stored information contains historic information of product quantity in the dispenser, and
calculating in the central monitoring platform (CMP) (30) the remaining quantity of product inside the dispenser.
